# EUROPEAN PATENT SPECIFICATION

(11) **EP 4 417 374 B1**
(45) Date of publication and mention of the grant of the patent: **10.09.2025**
(21) Application number: 23866700.0
(22) Date of filing: 09.05.2023
(51) Int. Cl.: B25F 5/00, B25D 17/00, B25D 16/00, A47L 9/12, A47L 9/14

(54) **DUST COLLECTING DEVICE**
STAUBSAMMELVORRICHTUNG
DISPOSITIF DE COLLECTE DE POUSSIÈRE

(30) Priority: 06.01.2023 CN 202310021757
(43) Date of publication of application: 21.08.2024
(73) Proprietor: Jiangsu Dongcheng Tools Technology Co., Ltd, Nantong, Jiangsu 226244 (CN)
(72) Inventor: PU, Yuanwei, Nantong, Jiangsu 226244 (CN)
(74) Representative: Ipside
(86) International application number: PCT/CN2023/092893
(87) International publication number: WO 2024/146040

(56) References cited:
- CN-A- 106 926 199
- CN-A- 106 926 199
- CN-A- 115 958 567
- CN-A- 115 958 567
- CN-U- 214 182 265
- CN-U- 215 305 520
- CN-U- 217 122 604
- CN-U- 217 668 182
- JP-A- 2011 189 483
- JP-A- 2011 189 483
- JP-A- 2012 000 210

## Description

### Technical Field

The present disclosure relates to the field of dust collection technologies, in particular to a dust collection device used in cooperation with a handheld electric tool.

### Background of the Invention

Dust collection devices are generally used in combination with electric tools. For example, because the electric tools produce dust and debris during drilling operations, the dust collection devices are connected to the electric tools, such that when the electric tools operate, the dust collection devices suck the dust and debris produced by the electric tools to prevent environmental pollution.

For example, a dust collection device is disclosed in the Chinese invention patent CN106926199B, where the dust collection device is mounted on an electric tool and includes a dust collection box and a dust collection body; and a compensation element is arranged between the dust collection box and the dust collection body, is movable relative to a ventilation chamber in the dust collection body, and has a sealing element arranged to hermetically connect the dust collection box to the dust collection body. During the insertion and extraction of the dust collection box by a user, a sealing gasket and an inner wall of the dust collection body continuously rub against each other, causing the sealing gasket to be damaged due to physical wear. This not only reduces the effect of sealing between the dust collection body and the dust collection box by the sealing gasket, but also shortens the service life of the sealing gasket.

In view of this, it is indeed necessary to provide an improved dust collection device, to overcome the defects existing in the prior art.

### Summary of the Invention

In view of the deficiencies in the prior art, an objective of the present disclosure is to provide a dust collection device which can reduce the friction between a sealing gasket and a dust collection body to prolong the service life of the sealing gasket.

To solve the existing technical problems, the present disclosure adopts the following technical solution: a dust collection device is provided, including a dust collection body and a dust collection box inserted into the dust collection body, where the dust collection body has a connecting part for accommodating the dust collection box and a ventilation chamber located in the dust collection body, the connecting part has a first side wall attached to the dust collection box, and the first side wall is provided with an opening communicating with the ventilation chamber; the dust collection box has a dust collection seat and a buckle plate arranged on the dust collection seat in a covering manner, and the buckle plate is provided with a penetrating hole matched with the opening and communicating with the dust collection box; an outer surface of at least one of the buckle plate and the first side wall is provided with a sealing gasket protruding outwards;
the outer surface of one of the buckle plate and the first side wall is provided with protruding parts protruding outwards, and the other one is provided with clamping grooves recessed inwards along an outer surface and matched with the protruding parts;
when the dust collection box is inserted into the dust collection body, the protruding parts slide along the outer surface of one of the first side wall and the buckle plate, to isolate the friction between the first side wall or the buckle plate and the sealing gasket; and
when the dust collection box is completely inserted into the dust collection body, the protruding parts are clamped in the clamping grooves, and the sealing gasket is hermetically connected to the opening and the penetrating hole.

Further, the sealing gasket and the protruding parts protrude outwards from the outer surface of the buckle plate; and the clamping grooves are recessed inwards from the outer surface of the first side wall.

Further, the dust collection box further includes an elastic pad hermetically connected between the dust collection seat and the buckle plate; and when the dust collection box is inserted into the dust collection body, the elastic pad pushes and presses the buckle plate towards the dust collection body.

Further, the buckle plate is pivotally or detachably connected to the dust collection seat.

Further, the protruding parts are arranged at a periphery of the sealing gasket and are higher than the sealing gasket.

Further, the sealing gasket is in the shape of a quadrangle; and the four protruding parts are distributed at peripheries of corners of the quadrangle.

Further, a motor is arranged in the ventilation chamber; a filter assembly is accommodated in the dust collection box, is connected to an inner surface of the buckle plate, and blocks the penetrating hole; and the motor generates a negative pressure to suck in an airflow from the dust collection box, and the airflow sequentially passes through the filter assembly, the penetrating hole, the sealing gasket, and the opening.

Further, the sealing gasket and the protruding parts protrude outwards from the outer surface of the first side wall; and the clamping grooves are recessed inwards from the outer surface of the buckle plate.

Further, the sealing gasket protrudes outward and the clamping grooves are recessed inwards from the outer surface of the buckle plate; and the protruding parts protrude outwards from the outer surface of the first side wall.

Further, the sealing gasket protrudes and the clamping grooves are recessed inwards from the outer surface of the first side wall; and the protruding parts protrude outwards from the outer surface of the buckle plate.

Further, the dust collection device includes a telescopic assembly for sucking dust; and the telescopic assembly is at least partially accommodated in the dust collection body, is connected to the dust collection body in a relative sliding manner, and communicates with the dust collection box and the ventilation chamber.

Compared with the prior art, the present disclosure has the following beneficial effects:
According to the present disclosure, the outer surface of one of the buckle plate of the dust collection box and the first side wall of the connecting part is provided with the protruding parts higher than the sealing gasket, and the other one is provided with clamping grooves recessed inwards along an outer surface and matched with the protruding parts; and when the dust collection box is inserted into the dust collection body, the protruding parts slide along the outer surface of one of the first side wall and the buckle plate, such that the friction between the first side wall or the buckle plate and the sealing gasket can be isolated, thereby greatly reducing the physical wear of the sealing gasket and prolonging the service life of the sealing gasket.

In addition, according to the present disclosure, the elastic pad is arranged between the dust collection seat and the buckle plate. During insertion of the dust collection box, the protruding parts slide along the outer surface of one of the first side wall and the buckle plate, and the buckle plate can be shifted towards the dust collection seat by squeezing the elastic pad, to ensure that the dust collection box can be smoothly pushed into the dust collection body; and after the dust collection box is pushed into the dust collection body, the buckle plate causes the sealing gasket to be closely attached to the first side wall by a squeezing force of the elastic pad, thereby further improving the effect of sealing between the buckle plate and the first side wall.

### Brief Description of the Drawings

The specific embodiments of the present disclosure are further described in detail below with reference to the accompanying drawings.
FIG. 1 is a three-dimensional view of a dust collection device mounted on an electric tool according to a first embodiment of the present disclosure;
FIG. 2 is a sectional view of the dust collection device shown in FIG. 1;
FIG. 3 is a three-dimensional view of separation of a dust collection box from a dust collection body in the dust collection device shown in FIG. 1;
FIG. 4 is a three-dimensional view of a dust collection box in the present disclosure;
FIG. 5 is a three-dimensional view of a buckle plate of a dust collection box in an opened state in the present disclosure, in which an elastic pad is located on the buckle plate;
FIG. 6 is a three-dimensional view of a buckle plate of a dust collection box in an opened state in the present disclosure, in which an elastic pad is located on a dust collection seat;
FIG. 7 is a three-dimensional view of a first side wall and a buckle plate in a dust collection device according to the present disclosure, in which a sealing gasket is located on the buckle plate;
FIG. 8 is a three-dimensional view of a first side wall and a buckle plate in a dust collection device according to the present disclosure, in which a sealing gasket is located on the first side wall;
FIG. 9 is a three-dimensional view of a first side wall and a buckle plate in a dust collection device according to a second embodiment, in which a sealing gasket is located on the buckle plate; and
FIG. 10 is a three-dimensional view of a first side wall and a buckle plate in a dust collection device according to a second embodiment, in which a sealing gasket is located on the first side wall.

In the drawings, reference numerals are described as follows:

| | | | |
|---|---|---|---|
| electric tool | 200 | drill bit | 210 |
| dust collection device | 100 | dust collection body | 10 |
| ventilation chamber | 11 | motor | 111 |
| fan | 112 | connecting part | 12 |
| first side wall | 121 | opening | 1211 |
| clamping groove | 1212, 1212' | second side wall | 122 |
| through hole | 1221 | dust collection box | 20 |
| dust collection seat | 21 | bulge | 211 |
| buckle plate | 22 | penetrating hole | 221 |
| sealing gasket | 222 | protruding part | 223, 223' |
| buckle part | 224 | filter assembly | 23 |
| filter base | 231 | filter net | 232 |
| elastic pad | 24 | air inlet | 25 |
| clamping part | 26 | telescopic assembly | 30 |
| slip tube | 31 | telescopic tube | 32 |
| adapter tube | 33 | dust suction head | 34 |

### Detailed Description of Embodiments

The terms used in the present disclosure are only for the purpose of describing the specific embodiments and are not intended to limit the present disclosure. The orientations or positional relationships indicated by the terms "upper", "lower", "front", "rear", etc. below are based on the orientations or positional relationships shown in the accompanying drawings, merely for the convenience of describing the present disclosure and simplifying the description, rather than indicating or implying that the referred device must have a particular orientation or be constructed and operated in a particular orientation, and therefore cannot be understood as limiting the present disclosure.

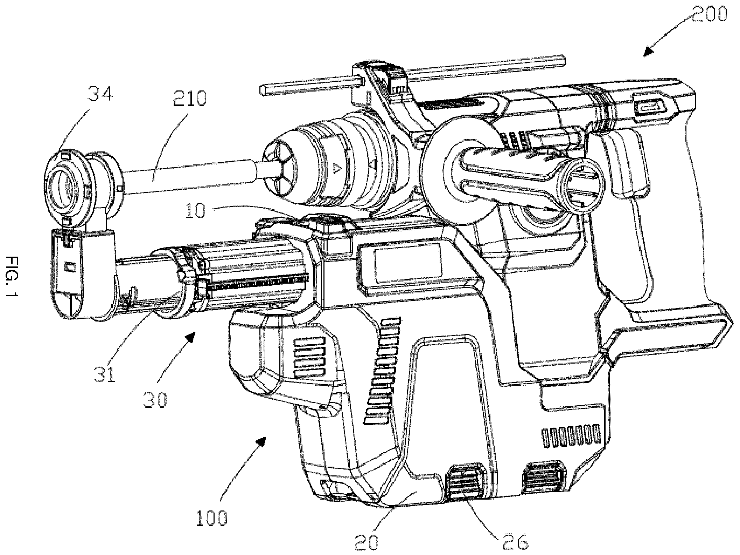

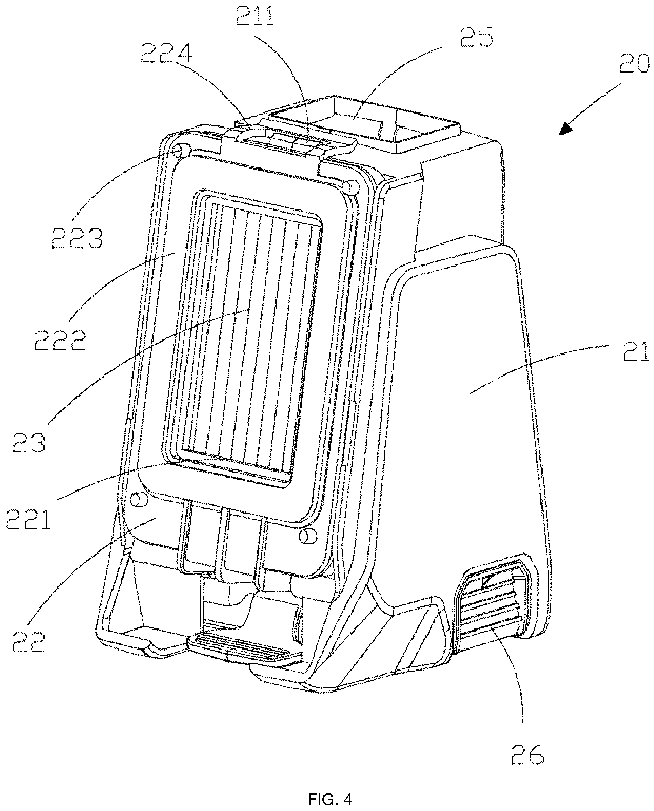

Referring to FIG. 1 to FIG. 8 which show a dust collection device 100 according to a first embodiment of the present disclosure, the dust collection device 100 is mounted on an electric tool 200. In this embodiment, the electric tool 200 is an electric hammer for decoration, chiseling, and other occasions. The electric tool 200 includes a transmission assembly mounted inside the electric tool 200, a drill bit 210 mounted at a front end of the electric tool 200 and driven by the transmission assembly. The dust collection device 100 is inserted into the electric tool 200 and sucks dust and debris produced after processing by the drill bit 210.

The dust collection device 100 includes a dust collection body 10, a ventilation chamber 11 located in the dust collection body 10, a dust collection box 20 inserted into the dust collection body 10, and a telescopic assembly 30 at least partially accommodated in the dust collection body 10. A motor 111 and a fan 112 coaxial with the motor 111 are arranged in the ventilation chamber 11. The motor 111 drives the fan 112 to rotate to form a negative pressure in the ventilation chamber 11, and then an airflow carrying the dust and debris and flowing through the telescopic assembly 30 is sucked through the dust collection box 20.

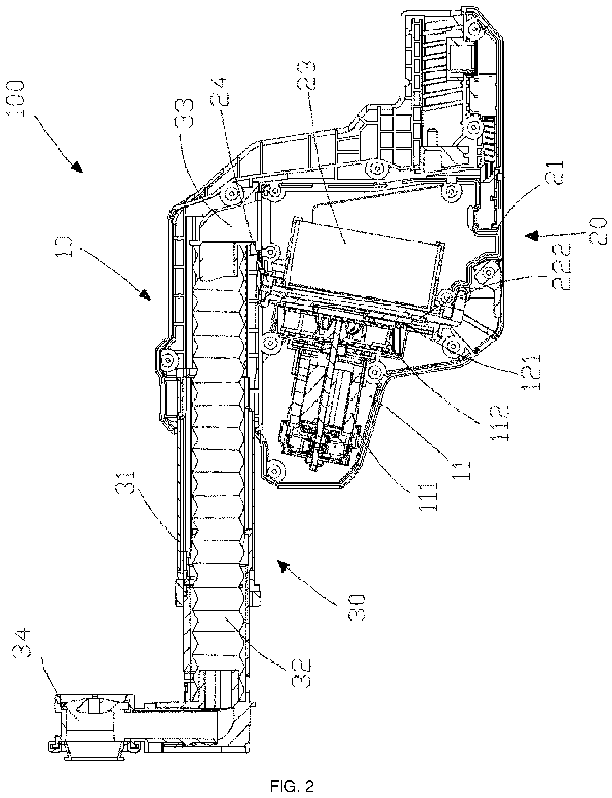

Referring to FIG. 2, the telescopic assembly 30 includes a slip tube 31, a telescopic tube 32, an adapter tube 33, and a dust suction head 34, where the slip tube 31 is supported on the dust collection body 10 in a sliding manner, the dust suction head 34 is fixedly arranged at a front end of the slip tube 31, the drill bit 210 penetrates through the dust suction head 34 for drilling operation, the dust suction head 34 abuts against a processed surface and sucks in the dust, the adapter tube 33 is fixedly arranged in the dust collection body 10, the telescopic tube 32 is sleeved on the adapter tube 33, and the telescopic tube 32 and the adapter tube 33 are accommodated in the slip tube 31. The telescopic assembly 30 extends forward and backward along a processing direction of the electric tool 200 to suck the dust and debris at any time.

Referring to FIG. 2 to FIG. 4, the dust collection body 10 has a connecting part 12 for accommodating the dust collection box 20, and the connecting part 12 has a first side wall 121 defining the ventilation chamber 11 and a second side wall 122 located below the adapter tube 33. An opening 1211 communicating with the ventilation chamber 11 is provided in a center of the first side wall 121; a through hole 1221 communicating with the adapter tube 33 is provided in the second side wall 122; when the dust collection box 20 is inserted into the dust collection body 10, an upper surface of the dust collection box 20 abuts against the second side wall 122; and the upper surface of the dust collection box 20 is provided with an air inlet 25 matched with the through hole 1221. The dust and debris fall into the dust collection box 20 through the telescopic tube 32, the adapter tube 33, the through hole 1221, and the air inlet 25.

The dust collection box 20 has a dust collection seat 21, a filter assembly 23, and a buckle plate 22 arranged on the dust collection seat 21 in a covering manner, where the buckle 22 is provided with a penetrating hole 221 matched with the opening 1211 and communicating with the dust collection box 20.

The filter assembly 23 includes a filter base 231 and a filter net 232 accommodated in the filter base 231, where the filter base 231 abuts against an inner surface of the buckle plate 22, and the filter net 232 covers the penetrating hole 221 and is configured to filter the airflow passing through the filter net 232, to retain the dust and debris, in the airflow, in the dust collection box 20.

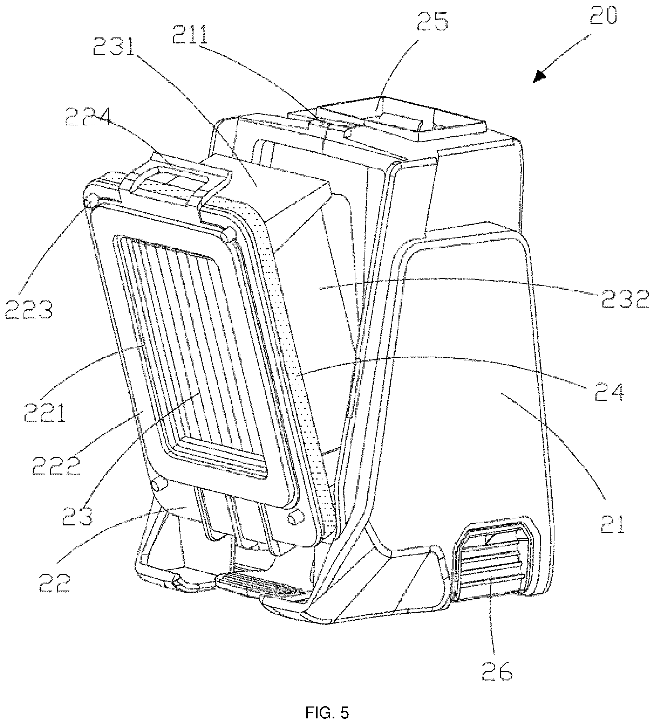

Referring to FIG. 5, one end of the buckle plate 22 is pivotally connected to the dust collection seat 21, and the other end of the buckle plate that is opposite to the pivotable end is provided with a buckle part 224 extending towards the dust collection seat 21. A bulge 211 is arranged on the dust collection seat 21. When the buckle plate 22 is arranged on the dust collection seat 21 in a covering manner, the buckle part 224 is clamped on the bulge 211. When the buckle plate 22 is opened, the dust can be further cleaned or the filter assembly 23 can be replaced. Certainly, the buckle plate 22 may be connected to the dust collection seat 21 in other detachable modes, for example, in a non-pivoting mode, the buckle plate 22 moves directly along a straight line and is arranged on the dust collection seat 21 in a covering manner.

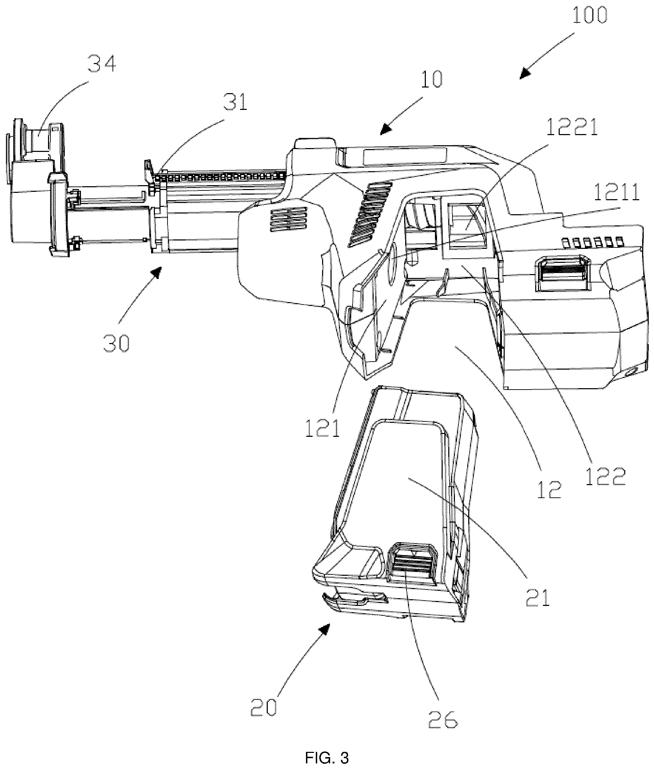

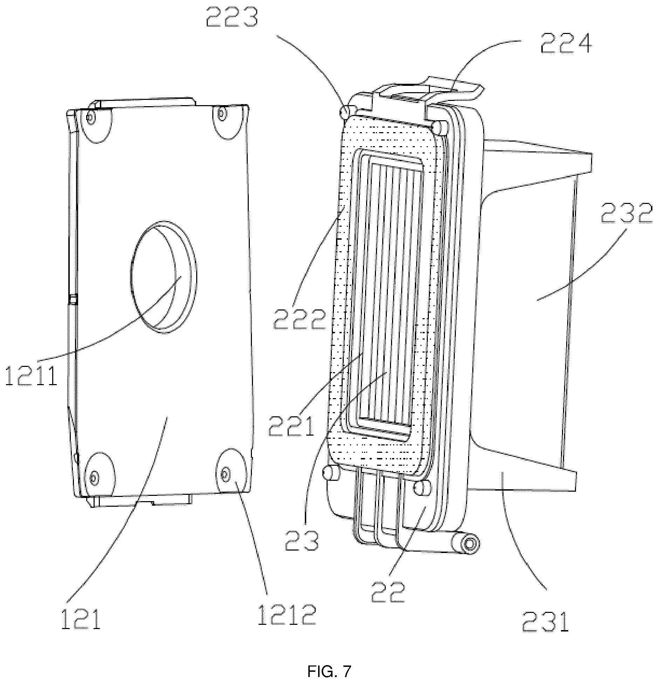

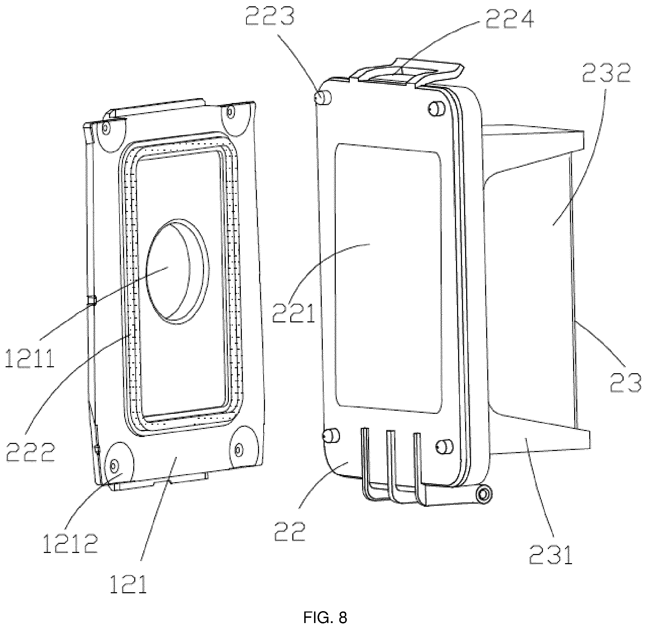

Referring to FIG. 3 and FIG. 7, a sealing gasket 222 is arranged between the buckle plate 22 and the first side wall 121, where the sealing gasket 222 is in the shape of a quadrangle, is fixedly arranged on an outer surface of the buckle plate 22, and is arranged around the penetrating hole 221. The outer surface of the buckle plate 22 is provided with four protruding parts 223 protruding outwards, where the protruding parts 223 are distributed at peripheries of four corners of the sealing gasket 222 and are higher than the sealing gasket 222. The first side wall 121 is provided with clamping grooves 1212 recessed inwards along an outer surface and matched with the protruding parts 223. When the dust collection box 20 is inserted into the dust collection body 10, the protruding parts 223 slide along the outer surface of the first side wall 121, such that the friction between the sealing gasket 222 and the first side wall 121 or the buckle plate 22 is isolated, thereby reducing the physical wear of the sealing gasket 222 and prolonging the service life of the sealing gasket 222. When the dust collection box 20 is completely inserted into the dust collection body 10, the protruding parts 223 are clamped in the clamping grooves 1212, and the sealing gasket 222 is hermetically connected to the opening 1211 and the penetrating hole 221, thereby preventing air leakage between the dust collection box 20 and the dust collection body 10 when the airflow is sucked in. Referring to FIG. 8, in other embodiments, the sealing gasket 222 may be arranged on the outer surface of the first side wall 121.

Referring to FIG. 5, the dust collection box 20 further includes an elastic pad 24 hermetically connected between the dust collection seat 21 and the buckle plate 22, where the elastic pad 24 surrounds a periphery of the filter base 231, and the inner surface of the buckle plate 22 is hermetically connected to a side wall of the dust collection seat 21 through the elastic pad 24, thereby preventing the dust in the dust collection seat 21 from leaking to the outside and preventing the air leakage during the process of sucking in the airflow.

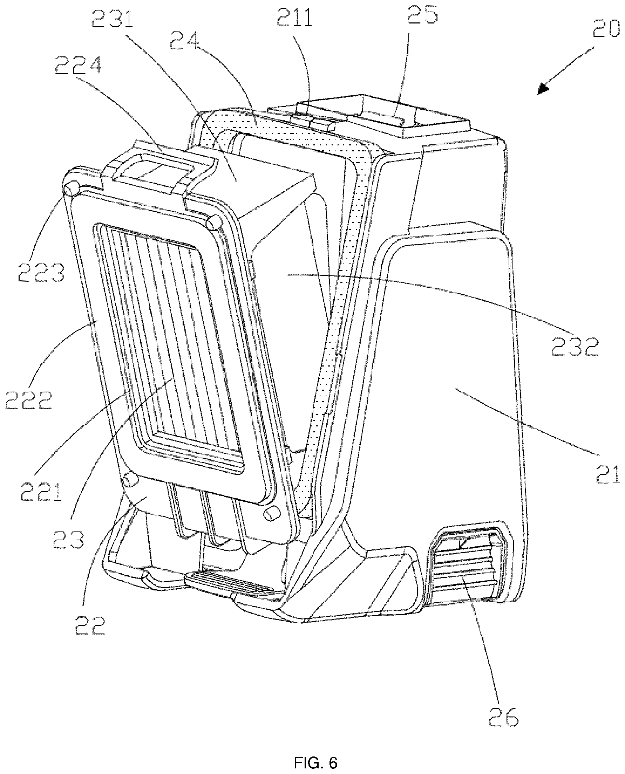

When the dust collection box 20 is completely inserted into the dust collection body 10, the elastic pad 24 pushes and presses the buckle plate 22 towards the dust collection body 10 to provide a press force between the buckle plate 22 and the first side wall 121, thereby further improving the sealing performance. In this embodiment, the elastic pad 24 is attached to the inner surface of the buckle plate 22. Referring to FIG. 6, in other embodiments, the elastic pad 24 may also be attached to the dust collection seat 21.

Referring to FIG. 3, the dust collection box 20 is provided with a pair of clamping parts 26 extending upwards from a bottom wall and located on two sides of the bottom wall. When the protruding parts 223 are matched with the clamping grooves 1212, the clamping parts 26 are clamped with the dust collection body 10 to fix the dust collection box 20 to the dust collection body 10, and then the clamping parts 26 are pressed to dismount the dust collection box 20 from the dust collection body 10, to pour out the dust and debris conveniently and quickly.

According to the present disclosure, the outer surface of one of the buckle plate 22 of the dust collection box 20 and the first side wall 121 of the connecting part 12 is provided with the protruding parts 223 higher than the sealing gasket 222, and the other one is provided with the clamping grooves 1212 recessed inwards along the outer surface and matched with the protruding parts 223; and when the dust collection box 20 is inserted into the dust collection body 10, the protruding parts 223 slide along the outer surface of one of the first side wall 121 and the buckle plate 22, such that the friction between the first side wall 121 or the buckle plate 22 and the sealing gasket 222 can be isolated, thereby greatly reducing the physical wear of the sealing gasket 222 and prolonging the service life of the sealing gasket 222.

In addition, according to the present disclosure, the elastic pad 24 is arranged between the dust collection seat 21 and the buckle plate 22. During insertion of the dust collection box 20, the protruding parts 223 slide along the outer surface of one of the first side wall 121 and the buckle plate 22, and the buckle plate 22 can be shifted towards the dust collection seat 21 by squeezing the elastic pad 24, to ensure that the dust collection box 20 can be smoothly pushed into the dust collection body 10; and after the dust collection box 20 is pushed into the dust collection body 10, the buckle plate 22 causes the sealing gasket 222 to be closely attached to the first side wall 121 by a squeezing force of the elastic pad 24, thereby further improving the effect of sealing between the buckle plate 22 and the first side wall 121.

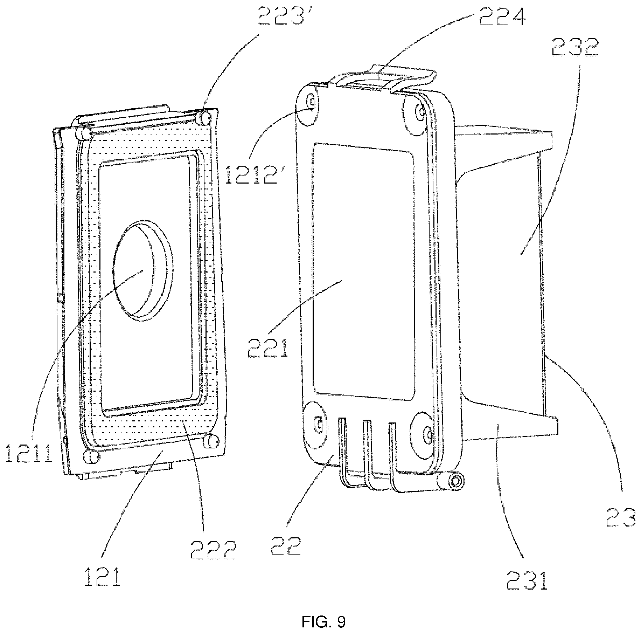

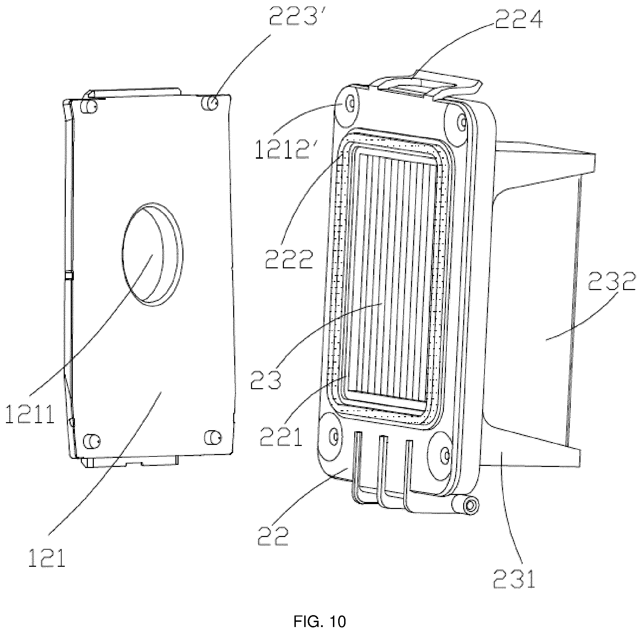

Referring to FIG. 9 again which shows a second embodiment of the present disclosure, compared with the first embodiment, the outer surface of the first side wall 121 is provided with the sealing gasket 222 protruding outwards and four protruding parts 223' located at peripheries of corners of the sealing gasket 222 and protruding outwards, the protruding parts 223' are higher than the sealing gasket 222, and the buckle plate 22 is provided with clamping grooves 1212' recessed inwards along an outer surface and matched with the protruding parts 223'. Referring to FIG. 10, in other embodiments, the sealing gasket 222 may be arranged on the outer surface of the buckle plate 22. The outer surface of the first side wall 121 of the connecting part 12 is provided with the protruding parts 223' higher than the sealing gasket 222, and the buckle plate 22 is provided with the clamping grooves 1212' recessed inwards along the outer surface and matched with the protruding parts 223'; and when the dust collection box 20 is inserted into the dust collection body 10, the protruding parts 223' slide along the outer surface of the buckle plate 22, such that the friction between the first side wall 121 or the buckle plate 22 and the sealing gasket 222 can be isolated, thereby greatly reducing the physical wear of the sealing gasket 222 and prolonging the service life of the sealing gasket 222.

The present disclosure is not limited to the above specific embodiments. Those of ordinary skill in the art can readily understand that there are still many alternative solutions for the dust collection device according to the present disclosure without departing from the principle and scope of the present disclosure. The scope of protection of the present disclosure is subject to the content of the claims.

## Claims

1. A dust collection device (100), comprising a dust collection body (10) and a dust collection box (20) inserted into the dust collection body (10), wherein the dust collection body (10) has a connecting part (12) for accommodating the dust collection box (20) and a ventilation chamber (11) located in the dust collection body (10), the connecting part has a first side wall (121) attached to the dust collection box (20), and the first side wall (121) is provided with an opening (1211) communicating with the ventilation chamber (11); the dust collection box (20) has a dust collection seat (21) and a buckle plate (22) arranged on the dust collection seat (21) in a covering manner, and the buckle plate (22) is provided with a penetrating hole (221) matched with the opening (1211) and communicating with the dust collection box (20); the dust collection device (100) is **characterized in that** an outer surface of at least one of the buckle plate (22) and the first side wall (121) is provided with a sealing gasket (222) protruding outwards;
the outer surface of one of the buckle plate (22) and the first side wall (121) is provided with protruding parts (223, 223') protruding outwards, and the other one is provided with clamping grooves (1212, 1212') recessed inwards along an outer surface and matched with the protruding parts (223, 223');
when the dust collection box (20) is inserted into the dust collection body (10), the protruding parts (223, 223') slide along the outer surface of one of the first side wall (121) and the buckle plate (22), to isolate the friction between the first side wall (121) or the buckle plate (22) and the sealing gasket (222); and
when the dust collection box (20) is completely inserted into the dust collection body (10), the protruding parts (223, 223') are clamped in the clamping grooves (1212, 1212'), and the sealing gasket (222) is hermetically connected to the opening (1211) and the penetrating hole (221).

2. The dust collection device according to claim 1, **characterized in that** the sealing gasket (222) and the protruding parts (223, 223') protrude outwards from the outer surface of the buckle plate (22); and the clamping grooves (1212, 1212') are recessed inwards from the outer surface of the first side wall (121).

3. The dust collection device according to claim 1, **characterized in that** the dust collection box (20) further comprises an elastic pad (24) hermetically connected between the dust collection seat (21) and the buckle plate (22); and when the dust collection box (20) is inserted into the dust collection body (10), the elastic pad (24) pushes and presses the buckle plate (22) towards the dust collection body (10).

4. The dust collection device according to claim 1, **characterized in that** the buckle plate (22) is pivotally or detachably connected to the dust collection seat (21).

5. The dust collection device according to claim 1, **characterized in that** the protruding parts (223, 223') are arranged at a periphery of the sealing gasket (222) and are higher than the sealing gasket (222).

6. The dust collection device according to claim 5, **characterized in that** the sealing gasket (222) is in the shape of a quadrangle; and the four protruding parts (223, 223') are distributed at peripheries of corners of the quadrangle.

7. The dust collection device according to claim 1, **characterized in that** a motor (111) is arranged in the ventilation chamber (11); a filter assembly (23) is accommodated in the dust collection box (20), is connected to an inner surface of the buckle plate (22), and blocks the penetrating hole (221); and the motor (111) generates a negative pressure to suck in an airflow from the dust collection box (20), and the airflow sequentially passes through the filter assembly (23), the penetrating hole (221), the sealing gasket (222), and the opening (1211).

8. The dust collection device according to claim 1, **characterized in that** the sealing gasket (222) and the protruding parts (223, 223') protrude outwards from the outer surface of the first side wall (121); and the clamping grooves (1212, 1212') are recessed inwards from the outer surface of the buckle plate (22).

9. The dust collection device according to claim 1, **characterized in that** the sealing gasket (222) protrudes outward and the clamping grooves (1212, 1212') are recessed inwards from the outer surface of the buckle plate (22); and the protruding parts (223, 223') protrude outwards from the outer surface of the first side wall (121).

10. The dust collection device according to claim 1, **characterized in that** the sealing gasket (222) protrudes and the clamping grooves (1212, 1212') are recessed inwards from the outer surface of the first side wall (121); and the protruding parts (223, 223') protrude outwards from the outer surface of the buckle plate (22).

11. The dust collection device according to any one of claims 1 to 10, **characterized in that** the dust collection device (100) comprises a telescopic assembly (30) for sucking dust; and the telescopic assembly (30) is at least partially accommodated in the dust collection body (10), is connected to the dust collection body (10) in a relative sliding manner, and communicates with the dust collection box (20) and the ventilation chamber (11).

## Patentansprüche

1. Staubsammelvorrichtung (100), umfassend einen Staubsammelkörper (10) und einen in den Staubsammelkörper (10) eingesetzten Staubsammelkasten (20), wobei der Staubsammelkörper (10) ein Verbindungsteil (12) zur Aufnahme des Staubsammelkastens (20) und eine Belüftungskammer (11) aufweist, die sich im Staubsammelkörper (10) befindet, wobei das Verbindungsteil eine erste Seitenwand (121) aufweist, die am Staubsammelkasten (20) befestigt ist, und die erste Seitenwand (121) mit einer Öffnung (1211) versehen ist, die mit der Belüftungskammer (11) in Verbindung steht; wobei der Staubsammelkasten (20) einen Staubsammelsitz (21) und eine Abdeckplatte (22) aufweist, die auf dem Staubsammelsitz (21) abdeckend angeordnet ist, und wobei die Abdeckplatte (22) mit einem mit der Öffnung (1211) übereinstimmenden und mit dem Staubsammelkasten (20) in Verbindung stehenden Durchgangsloch (221) versehen ist; wobei die Staubsammelvorrichtung (100) **dadurch gekennzeichnet ist, dass** eine Außenfläche der Abdeckplatte (22) und/oder der ersten Seitenwand (121) mit einer nach außen vorstehenden Dichtung (222) versehen ist;
wobei die Außenfläche eines von der Abdeckplatte (22) und der ersten Seitenwand (121) mit nach außen vorstehenden Teilen (223, 223') versehen ist, und das andere mit Klemmnuten (1212, 1212') versehen ist, die entlang einer Außenfläche nach innen vertieft sind und mit den vorstehenden Teilen (223, 223') übereinstimmen;
wobei, wenn der Staubsammelkasten (20) in den Staubsammelkörper (10) eingesetzt ist, die vorstehenden Teile (223, 223') entlang der Außenfläche einer von der ersten Seitenwand (121) und der Abdeckplatte (22) gleiten, um die Reibung zwischen der ersten Seitenwand (121) oder der Abdeckplatte (22) und der Dichtung (222) zu isolieren; und
wenn der Staubsammelkasten (20) vollständig in den Staubsammelkörper (10) eingesetzt ist, die vorstehenden Teile (223, 223') in den Klemmnuten (1212, 1212') eingeklemmt werden und die Dichtung (222) hermetisch mit der Öffnung (1211) und dem Durchgangsloch (221) verbunden wird.

2. Staubsammelvorrichtung nach Anspruch 1, **dadurch gekennzeichnet, dass** die Dichtung (222) und die vorstehenden Teile (223, 223') von der Außenfläche der Abdeckplatte (22) nach außen vorstehen; und die Klemmnuten (1212, 1212') von der Außenfläche der ersten Seitenwand (121) nach innen vertieft sind.

3. Staubsammelvorrichtung nach Anspruch 1, **dadurch gekennzeichnet, dass** der Staubsammelkasten (20) ferner ein elastisches Polster (24) umfasst, das hermetisch zwischen dem Staubsammelsitz (21) und der Abdeckplatte (22) verbunden ist; und wenn der Staubsammelkasten (20) in den Staubsammelkörper (10) eingesetzt wird, schiebt und drückt das elastische Polster (24) die Abdeckplatte (22) in Richtung des Staubsammelkörpers (10).

4. Staubsammelvorrichtung nach Anspruch 1, **dadurch gekennzeichnet, dass** die Abdeckplatte (22) schwenkbar oder abnehmbar mit dem Staubsammelsitz (21) verbunden ist.

5. Staubsammelvorrichtung nach Anspruch 1, **dadurch gekennzeichnet, dass** die vorstehenden Teile (223, 223') an einem Umfang der Dichtung (222) angeordnet sind und höher liegen als die Dichtung (222).

6. Staubsammelvorrichtung nach Anspruch 5, **dadurch gekennzeichnet, dass** die Dichtung (222) die Form eines Vierecks hat; und die vier vorstehenden Teile (223, 223') an den Umfängen von Ecken des Vierecks verteilt sind.

7. Staubsammelvorrichtung nach Anspruch 1, **dadurch gekennzeichnet, dass** ein Motor (111) in der Belüftungskammer (11) angeordnet ist; eine Filterbaugruppe (23) in dem Staubsammelkasten (20) untergebracht ist, mit einer Innenfläche der Abdeckplatte (22) verbunden ist und das Durchgangsloch (221) blockiert; und der Motor (111) einen Unterdruck erzeugt, um einen Luftstrom aus dem Staubsammelkasten (20) anzusaugen, und der Luftstrom nacheinander durch die Filterbaugruppe (23), das Durchgangsloch (221), die Dichtung (222) und die Öffnung (1211) strömt.

8. Staubsammelvorrichtung nach Anspruch 1, **dadurch gekennzeichnet, dass** die Dichtung (222) und die vorstehenden Teile (223, 223') von der Außenfläche der ersten Seitenwand (121) nach außen vorstehen; und die Klemmnuten (1212, 1212') von der Außenfläche der Abdeckplatte (22) nach innen vertieft sind.

9. Staubsammelvorrichtung nach Anspruch 1, **dadurch gekennzeichnet, dass** die Dichtung (222) nach außen vorsteht und die Klemmnuten (1212, 1212') von der Außenfläche der Abdeckplatte (22) nach innen vertieft sind; und die vorstehenden Teile (223, 223') von der Außenfläche der ersten Seitenwand (121) nach außen vorstehen.

10. Staubsammelvorrichtung nach Anspruch 1, **dadurch gekennzeichnet, dass** die Dichtung (222) vorsteht und die Klemmnuten (1212, 1212') von der Außenfläche der ersten Seitenwand (121) nach innen vertieft sind; und die vorstehenden Teile (223, 223') von der Außenfläche der Abdeckplatte (22) nach außen vorstehen.

11. Staubsammelvorrichtung nach einem der Ansprüche 1 bis 10, **dadurch gekennzeichnet, dass** die Staubsammelvorrichtung (100) eine Teleskopbaugruppe (30) zum Ansaugen von Staub umfasst; und die Teleskopbaugruppe (30) mindestens teilweise im Staubsammelkörper (10) untergebracht ist, relativ gleitend mit dem Staubsammelkörper (10) verbunden ist und mit dem Staubsammelkasten (20) und der Belüftungskammer (11) in Verbindung steht.

## Revendications

1. Dispositif de collecte de poussière (100), comportant un corps de collecte de poussière (10) et un boîtier de collecte de poussière (20) inséré dans le corps de collecte de poussière (10), dans lequel le corps de collecte de poussière (10) présente une pièce de raccordement (12) pour loger le boîtier de collecte de poussière (20) et une chambre de ventilation (11) située dans le corps de collecte de poussière (10), la pièce de raccordement présente une première paroi latérale (121) fixée au boîtier de collecte de poussière (20), et la première paroi latérale (121) est pourvue d'une ouverture (1211) communiquant avec la chambre de ventilation (11) ; le boîtier de collecte de poussière (20) présente un siège de collecte de poussière (21) et une plaque de boucle (22) agencée sur le siège de collecte de poussière (21) de manière recouvrante, et la plaque de boucle (22) est pourvue d'un trou pénétrant (221) assorti à l'ouverture (1211) et communiquant avec le boîtier de collecte de poussière (20) ; le dispositif de collecte de poussière (100) est **caractérisé en ce qu'**une surface extérieure d'au moins l'une de la plaque de boucle (22) et de la première paroi latérale (121) est pourvue d'un joint d'étanchéité (222) faisant saillie vers l'extérieur ;
la surface extérieure de l'une de la plaque de boucle (22) et de la première paroi latérale (121) est pourvue de parties saillantes (223, 223') faisant saillie vers l'extérieur, et l'autre est pourvue de rainures de serrage (1212, 1212') en retrait vers l'intérieur le long d'une surface extérieure et assorties aux parties saillantes (223, 223') ;
lorsque le boîtier de collecte de poussière (20) est inséré dans le corps de collecte de poussière (10), les parties saillantes (223, 223') coulissent le long de la surface extérieure de l'une de la première paroi latérale (121) et de la plaque de boucle (22), pour isoler la friction entre la première paroi latérale (121) ou la plaque de boucle (22) et le joint d'étanchéité (222) ; et
lorsque le boîtier de collecte de poussière (20) est complètement inséré dans le corps de collecte de poussière (10), les parties saillantes (223, 223') sont serrées dans les rainures de serrage (1212, 1212'), et le joint d'étanchéité (222) est hermétiquement relié à l'ouverture (1211) et au trou pénétrant (221).

2. Dispositif de collecte de poussière selon la revendication 1, **caractérisé en ce que** le joint d'étanchéité (222) et les parties saillantes (223, 223') font saillie vers l'extérieur à partir de la surface extérieure de la plaque de boucle (22) ; et les rainures de serrage (1212, 1212') sont en retrait vers l'intérieur à partir de la surface extérieure de la première paroi latérale (121).

3. Dispositif de collecte de poussière selon la revendication 1, **caractérisé en ce que** le boîtier de collecte de poussière (20) comporte en outre un patin élastique (24) relié hermétiquement entre le siège de collecte de poussière (21) et la plaque de boucle (22) ; et lorsque le boîtier de collecte de poussière (20) est inséré dans le corps de collecte de poussière (10), le patin élastique (24) pousse et presse la plaque de boucle (22) vers le corps de collecte de poussière (10).

4. Dispositif de collecte de poussière selon la revendication 1, **caractérisé en ce que** la plaque de boucle (22) est reliée de manière pivotante ou détachable au siège de collecte de poussière (21).

5. Dispositif de collecte de poussière selon la revendication 1, **caractérisé en ce que** les parties saillantes (223, 223') sont agencées à une périphérie du joint d'étanchéité (222) et sont plus hautes que le joint d'étanchéité (222).

6. Dispositif de collecte de poussière selon la revendication 5, **caractérisé en ce que** le joint d'étanchéité (222) est en forme de quadrangle ; et les quatre parties saillantes (223, 223') sont réparties aux périphéries des coins du quadrangle.

7. Dispositif de collecte de poussière selon la revendication 1, **caractérisé en ce qu'**un moteur (111) est agencé dans la chambre de ventilation (11) ; un ensemble filtre (23) est logé dans le boîtier de collecte de poussière (20), est relié à une surface interne de la plaque de boucle (22), et bloque le trou pénétrant (221) ; et le moteur (111) génère une pression négative pour aspirer un flux d'air du boîtier de collecte de poussière (20), et le flux d'air passe séquentiellement à travers l'ensemble filtre (23), le trou pénétrant (221), le joint d'étanchéité (222), et l'ouverture (1211).

8. Dispositif de collecte de poussière selon la revendication 1, **caractérisé en ce que** le joint d'étanchéité (222) et les parties saillantes (223, 223') font saillie vers l'extérieur à partir de la surface extérieure de la première paroi latérale (121) ; et les rainures de serrage (1212, 1212') sont en retrait vers l'intérieur à partir de la surface extérieure de la plaque de boucle (22).

9. Dispositif de collecte de poussière selon la revendication 1, **caractérisé en ce que** le joint d'étanchéité (222) fait saillie vers l'extérieur et les rainures de serrage (1212, 1212') sont en retrait vers l'intérieur à partir de la surface extérieure de la plaque de boucle (22) ; et les parties saillantes (223, 223') font saillie vers l'extérieur à partir de la surface extérieure de la première paroi latérale (121).

10. Dispositif de collecte de poussière selon la revendication 1, **caractérisé en ce que** le joint d'étanchéité (222) fait saillie et les rainures de serrage (1212, 1212') sont en retrait vers l'intérieur à partir de la surface extérieure de la première paroi latérale (121) ; et les parties saillantes (223, 223') font saillie vers l'extérieur à partir de la surface extérieure de la plaque de boucle (22).

11. Dispositif de collecte de poussière selon l'une quelconque des revendications 1 à 10, **caractérisé en ce que** le dispositif de collecte de poussière (100) comporte un ensemble télescopique (30) pour aspirer la poussière ; et l'ensemble télescopique (30) est au moins partiellement logé dans le corps de collecte de poussière (10), est relié au corps de collecte de poussière (10) de manière en coulissement relatif, et communique avec le boîtier de collecte de poussière (20) et la chambre de ventilation (11).
